# EUROPEAN PATENT APPLICATION

(11) **EP 0 658 746 A1**
(43) Date of publication of application: **21.06.1995**
(21) Application number: 93203537.1
(22) Date of filing: 15.12.1993
(51) Int. Cl.: G01F 15/18, G01F 1/74, G12B 9/08

(54) **Device for carrying equipment through a conduit**

(71) Applicant: SHELL INTERNATIONALE RESEARCH MAATSCHAPPIJ B.V., NL-2596 HR Den Haag (NL)
(72) Inventor: Brown, David, NL-2288 GD Rijswijk (NL); den Boer, Johannis Josephus, NL-2288 GD Rijswijk (NL); van der Spek, Alexander Michael, NL-2288 GD Rijswijk (NL)

(57) **Abstract**

Device (1) for carrying equipment such as a flowmeters (6 and 7) through a conduit (2) comprising an elongated body (5) provided with the flowmeters (6 and 7), an active centralizing system to position the elongated body (2) in the conduit (5) and a position control system that causes the active centralizing system to adjust the position of the elongated body (2), wherein the active centralizing system comprises two support arms (15 and 18) located near the ends of the elongated body (5) and two support arms (16 and 17) located near the middle of the elongated body (5), each support arm (15, 16, 17 and 18) being provided with adjusting means controlled by the position control system to adjust the extension of the support arm (15, 16, 17 or 18).

## Description

The present invention relates to a device for carrying equipment, for example a flowmeter, through a conduit. Such a device comprises elongated body provided with the equipment, a passive centralizing system to position the elongated body in the conduit so that the position of its central longitudinal axis relative to the position of the central longitudinal axis of the conduit is maintained within a predetermined range. The predetermined range is smaller than the diameter of the elongated body.

Such a device for carrying a flowmeter through a conduit is for example described in SPE paper No. 5089 entitled 'The full bore flowmeter' by B C Leach, J B Jameson, J J Smolen and Y Nicolas, American Institute of Mining, Metallurgy, and Petroleum Engineers, Inc, 1974. In the known device the passive centralizing system comprises six protective centralizer skids and six centralizer arms, which are with one end connected to the longitudinal body by axially displaceable hinges, the other end of each arm being mechanically linked to a protective centralizer skid. The protective centralizer skids are pushed against the inner surface of the conduit by the centralizer arms which are actuated by springs. The central longitudinal axis of the elongated body is maintained within a predetermined range from the central longitudinal axis of the conduit by the reaction forces between the outer surface of the protective centralizer cage and the inner surface of the conduit. These reaction forces not only depend on the relative position of the central longitudinal axis of the elongated body but also on uncertain quantities such as variations in spring stiffness and the friction in the axially displaceable hinges. As a result the magnitudes of the reaction forces are undetermined and consequently precise positioning of the central longitudinal axis of the elongated body is not possible.

It is an object of the present invention to overcome this disadvantage.

To this end the device for carrying equipment through a conduit according to the present invention comprises an elongated body provided with the equipment, an active centralizing system to position the elongated body in the conduit and a position control system that causes the active centralizing system to adjust the position of the elongated body if the position of its central longitudinal axis relative to the position of the central longitudinal axis of the conduit is outside a predetermined range, wherein the active centralizing system comprises four support arms joined to the elongated body, each support arm being provided with adjusting means controlled by the position control system to adjust the extension of the support arm, and wherein the first support arm and the fourth support arm are located near the ends of the elongated body and the second support arm and the third support arm are located in the middle part of the elongated body.

Suitably the first and the fourth support arm are arranged in one plane through the central longitudinal axis of the elongated body, and the second and the third support arm are arranged at either side of the plane wherein the angle between each of the two support arms and the first support arm is 120°.

The position control system suitably includes a controller, distance measuring devices arranged near each support arm to measure the distance between the inner surface of the conduit and the central longitudinal axis of the longitudinal body, means for transmitting a signal representing the measured distances to the controller, and means for transmitting controller output to the adjusting means. Each distance measuring device measures the distance in a predetermined direction, for example perpendicular to the central longitudinal axis of the elongated body.

Suitably each distance measuring device comprises a feeler provided with a rotary incremental encoder.

The equipment arranged on the elongated body suitably includes two flowmeters arranged in the same plane and axially spaced apart at the elongated body. The use of two axially spaced apart flowmeters allows determining the flowrate of fluid flowing through the wall of the conduit into a volume element having a diameter equal to the diameter of the conduit and a length equal to the distance between the two flowmeters.

During normal operation the device is pulled through the conduit. One method is pulling the device with a cable or a pipe string with little torsion stiffness. To maintain the required angular position, the equipment is arranged on a pipe section arranged coaxially with the central longitudinal axis of the elongated body and joined rotatably with it, and wherein the device further includes a motor driving the pipe section and a direction control system to cause the motor to adjust the angular position of the pipe section if the angular position of the equipment with respect to the vertical is outside a predetermined range.

Alternatively the device is pulled through the conduit with a string that has a large torsion stiffness, or with a string of which the end is guided. In that case suitably the equipment, the support arms, and the distance measuring devices are arranged on a pipe section arranged coaxially with the central longitudinal axis of the elongated body and joined rotatably with it, and wherein the device further includes a motor driving the pipe section and a direction control system to cause the motor to adjust the angular position of the pipe section if the angular position of the equipment with respect to the norm is outside a predetermined range.

In respect of the angular position, the predetermined range is plus or minus a small angle (for example ±10°) from the vertical. The angular position of the equipment, for example a flowmeter, need not be vertical; thus in case the angular position of the equipment is not vertical, the predetermined range is the latter angular position plus or minus a small angle (for example ±10°).

In stead of pulling the device through the conduit, the device of the present invention can also be pushed through the conduit.

To allow measuring multiphase flow, in particular the flow of oil, gas and water through the conduit the equipment includes a flowmeter, which is suitably a multiphase flowmeter, and more suitably the multiphase flowmeter is a multi-capacitance multiphase flowmeter. For example a multiphase flowmeter as described in European patent application publication No. 510 774.

The invention further relates to a method of determining a fluid flow through a leak in a conduit comprising (a) displacing the device according to the invention provided with two multiphase flowmeters through the conduit, which flowmeters define a volume element; (b) measuring with the upstream flowmeter the flowrates of fluids leaving the volume element; (c) measuring with the downstream flowmeter the flowrates of fluids entering the volume element; and (d) determining the fluid flow through the leak by calculating the difference between the two flowrates.

The invention will now be described by way of example in more detail with reference to the drawings, wherein
Figure 1 shows schematically a longitudinal view of the device according to the present invention; and
Figure 2 shows a view along lines II-II of Figure 1.

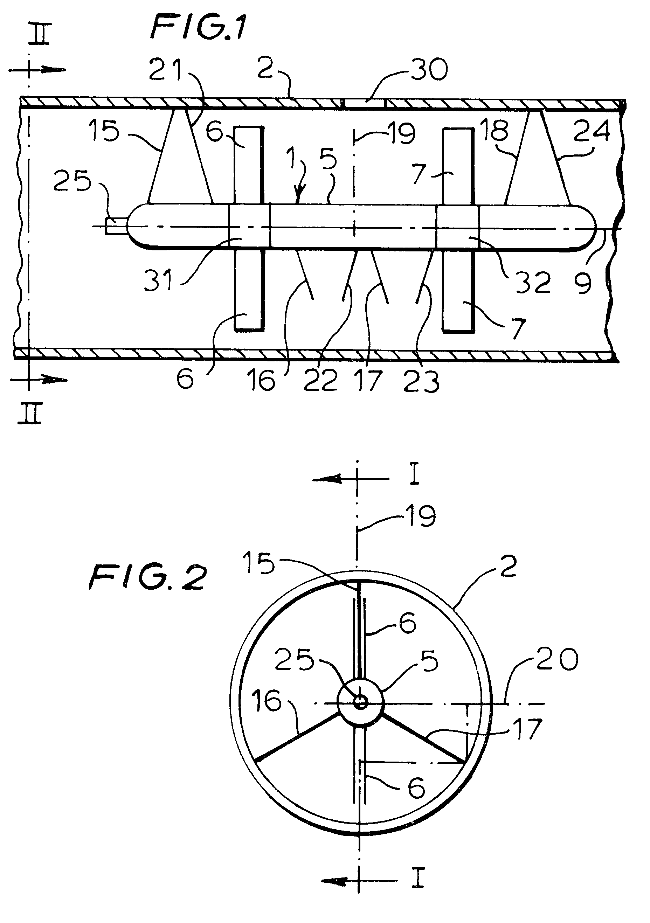

Reference is now made to Figures 1 and 2. The device 1 for measuring fluid flow through a conduit in the form of pipe 2 comprises an elongated body 5 provided with equipment in the form of flowmeters 6 and 7. The flowmeters 6 and 7 are multiphase multi-capacitance flowmeters. As the multi-capacitance flowmeter has been described in European patent application publication No. 510 774 they will not be described in this specification in more detail.

The device 1 further comprises an active centralizing system to position the elongated body 5 in the pipe 2 and a position control system (not shown) that causes the active centralizing system to adjust the position of the elongated body 5 if the position of its central longitudinal axis 9 relative to the position of the central longitudinal axis of the pipe 2 is outside a predetermined range. In Figure 1 the central longitudinal axis of the pipe 2 coincides with central longitudinal axis 9.

The active centralizing system comprises four support arms 15, 16, 17 and 18 joined to the elongated body 5. Each support arm 15, 16, 17 and 18 is provided with adjusting means (not shown) controlled by the position control system to adjust the extension of the support arm 15, 16, 17 or 18. The adjusting means can be a motor which can adjust the angle between the support arm and the central longitudinal axis 9 of the elongated body 5; or it can be a device that can adjust the length of the support arm. The first support arm 15 and the fourth support arm 18 are located near the ends of the elongated body 5, and they are arranged in one plane through the central longitudinal axis 9 of the elongated body 5. The second support arm 16 and the third support arm 17 are located in the middle part of the elongated body 5, and the angle between each of the two support arms 16 or 17 and the first support arm 15 is 120°.

There are only four support arms required to position the central longitudinal axis 9 of the elongated body 5 in the pipe 2. This can be understood as follows. A body has generally six degrees of freedom, three rotations and three translation. However, in this case the translation in the direction of the central longitudinal axis 9 and the rotation about the central longitudinal axis 9 are irrelevant. Consequently the elongated body 5 has only four degrees of freedom: two rotations about mutual perpendicular axes 19 and 20 which are perpendicular to the central longitudinal axis 9 two translations in the directions of the axes 19 and 20. The four support arms 15, 16, 17 and 18 cooperating with the curved inner surface of the pipe 2 are sufficient to constrain the two rotations and the two translations.

The position control system includes a controller (not shown), distance measuring devices in the form of feelers 21, 22, 23 and 24 provided with a rotary incremental encoders (not shown) arranged near each support arm 15, 16, 17 and 18 to measure the distance between the inner surface of the pipe 2 and the central longitudinal axis 9 of the longitudinal body 5, means (not shown) for transmitting a signal representing the measured distances to the controller, and means (not shown) for transmitting controller output to the adjusting means of the support arms 15, 16, 17 and 18.

The longitudinal body 5 is further provided with a connector 25 to secure the longitudinal body 5 to a pull cable (not shown) to allow pulling the elongated body 5 through the pipe 2. The pull cable is provided with leads through which electric energy is supplied to the longitudinal body 5 for powering the active centralizing system, the position control system, and the flowmeters 6 and 7, and the pull cable is furthermore provided with leads through which the signals from the flowmeters 6 and 7 are transmitted to device (not shown) for further treatment. The connector 25 is provided with means to connect the leads in the pull cable to corresponding leads (not shown) in the elongated body 5.

During normal operation the longitudinal body 5 is pulled through the pipe 2 with a predetermined velocity. The two flowmeters 6 and 7 define a volume element having a diameter equal to the diameter of the conduit and a length equal to the distance between the two flowmeters 6 and 7. The downstream flowmeter 6 measures the flowrate of the fluids in the pipe 2 leaving the volume element and the upstream flowmeter 7 measures the flowrate of the fluids entering the volume element. A difference between the flowrates will indicate that there is a leak in the wall of the pipe 2 and the difference equals the fluid flow through the leak, which fluid flow can be into the volume element or out of the fluid element. In Figure 1 the leak is referred to with reference numeral 30. The terms 'upstream' and 'downstream' refer to the positions of the flowmeters relative to the direction of the fluid flow through the pipe; in Figure 1 the fluid flow through the pipe is from right to left.

It will be understood that in determining the absolute magnitude of the flowrate the velocity of the elongated body 5 has to be taken into account.

The feelers 21, 22, 23 and 24 provided with a rotary incremental encoders which provide signals that represent the distances of between the central longitudinal axis 9 of the elongated body 5 with respect the inner surface of the pipe 2. These distances are used to determine the position of the central longitudinal axis 9 of the elongated body 5 with respect to the position of the central longitudinal axis of the pipe 2. When if the position of the central longitudinal axis 9 relative to the position of the central longitudinal axis of the pipe 2 is outside a predetermined range, the position control system causes the active centralizing system to adjust the position of the elongated body 5 so that the position of its central longitudinal axis 9 relative to the position of the central longitudinal axis of the pipe 2 is within the predetermined range. To this end the position control system determines which of the four support arms has to be adjusted and to which extend, it then activates the relevant support arm or support arms.

In the above an application of the device for measuring fluid flow through a conduit in the form of a pipe has been described, such as a well tubular. The conduit can also be an open borehole traversing an underground formation. The device of the present invention can be suitably used in an open borehole traversing an underground hydrocarbon bearing formation, as it will allow to determine in situ the influx of fluids into the borehole. The device is very suitably used in a horizontal borehole.

The device of the present invention can also be used to carry equipment through a pipeline, in which case the device will be pushed or pulled through the pipeline by means of a piston driven by the fluid flow through the pipeline.

In the device as shown in Figure 1 the second support arm 16 and the third support arm 17 are located in the middle part of the elongated body 5 at different distances from the first support arm 15. To allow using a shorter elongated body, the second and third support arm can be arranged at the same distance from the first support arm. The same applies to the feelers 22 and 23.

Suitably the free ends support arms and the feelers are provided with wheels or skates to facilitate gliding along the inner surface of the conduit.

Suitably the equipment, in this case the flowmeters 6 and 7, is maintained in a predetermined angular position, which is referred to as the norm. The norm can be the vertical or a predetermined angle from the vertical. To ensure that the flowmeters 6 and 7 are maintained within a predetermined range from the norm, the flowmeters 6 and 7 are arranged on rotatable pipe sections 31 and 32, respectively, which are arranged coaxially with the central longitudinal axis 9 of the elongated body 5. The rotatable pipe sections 31 and 32 are joined rotatably with the elongated body 5. The elongated body 5 further includes a motor (not shown) driving the pipe sections 31 and 32 and a direction control system (not shown) to cause the motor to adjust the angular position of the pipe sections 31 and 32 if the angular positions of the flowmeters 6 and 7 with respect to the vertical are outside a predetermined range to return the angular positions of the flowmeters to within the predetermined range.

Alternatively the device is pulled through the pipe with a pipe string (not shown) that has a larger torsion stiffness than the cable, or with a string of which the end is guided. In that case the angular position of the end of the string is determined, and consequently the angular position of the elongated body connected to the end of the string by means of the connector is determined as well. In other words the elongated body cannot rotate about the central longitudinal axis of the pipe. In this case it is advantageous to arrange the equipment, the support arms, and the distance measuring devices on a pipe section (not shown), which pipe section is arranged coaxially with the central longitudinal axis of the elongated body and joined rotatably with it, wherein the device further includes a motor driving the pipe section and a direction control system to cause the motor to adjust the angular position of the pipe section if the angular position of the equipment with respect to the vertical is outside a predetermined range.

## Claims

1. Device for carrying equipment through a conduit comprising an elongated body provided with the equipment, an active centralizing system to position the elongated body in the conduit and a position control system that causes the active centralizing system to adjust the position of the elongated body if the position of its central longitudinal axis relative to the position of the central longitudinal axis of the conduit is outside a predetermined range, wherein the active centralizing system comprises four support arms joined to the elongated body, each support arm being provided with adjusting means controlled by the position control system to adjust the extension of the support arm, and wherein the first support arm and the fourth support arm are located near the ends of the elongated body and the second support arm and the third support arm are located in the middle part of the elongated body.

2. Device according to claim 1, wherein the first and the fourth support arm are arranged in one plane through the central longitudinal axis of the elongated body.

3. Device according to claim 2, wherein the second and the third support arm are arranged at either side of the plane, and wherein the angle between each of the two support arms and the first support arm is 120°.

4. Device according to any one of the claims 1-3, wherein the position control system includes a controller, distance measuring devices arranged near each support arm to measure the distance between the inner surface of the conduit and the central longitudinal axis of the longitudinal body, means for transmitting a signal representing the measured distances to the controller, and means for transmitting controller output to the adjusting means.

5. Device according to claim 4, wherein each distance measuring device comprises a feeler provided with a rotary incremental encoder.

6. Device according to anyone of the claims 1-5, wherein the equipment is arranged on a pipe section arranged coaxially with the central longitudinal axis of the elongated body and joined rotatably with it, and wherein the device further includes a motor driving the pipe section and a direction control system to cause the motor to adjust the angular position of the pipe section if the angular position of the equipment with respect to the vertical is outside a predetermined range.

7. Device according to claim 4 or 5, wherein the equipment, the support arms, and the distance measuring devices are arranged on a pipe section arranged coaxially with the central longitudinal axis of the elongated body and joined rotatably with it, and wherein the device further includes a motor driving the pipe section and a direction control system to cause the motor to adjust the angular position of the pipe section if the angular position of the equipment with respect to the vertical is outside a predetermined range.

8. Device according to anyone of the claims 1-7, wherein the equipment includes a multiphase flowmeter.

9. Method of determining a fluid flow through a leak in a conduit comprising (a) displacing the device according to claim 8 provided with two multiphase flowmeters through the conduit, which flowmeters define a volume element; (b) measuring with the upstream flowmeter the flowrates of fluids leaving the volume element; (c) measuring with the downstream flowmeter the flowrates of fluids entering the volume element; and (d) determining the fluid flow through the leak by calculating the difference between the two flowrates.
